# FASCICULE DE BREVET EUROPEEN

(11) **EP 0 710 163 B1**
(45) Date de publication et mention de la délivrance du brevet: **29.12.1997**
(21) Numéro de dépôt: 93920555.5
(22) Date de dépôt: 18.03.1993
(51) Int. Cl.: B09B 3/00, C03B 5/02

(54) **PROCEDE DE TRAITEMENT DE MATERIAUX POLLUANTS ET FUSIBLES**
VERFAHREN ZUR BEHANDLUNG VON UMWELTBELASTENDEN UND SCHMELZBAREN MATERIALIEN
PROCESS FOR THE TREATMENT OF POLLUTING AND MELTABLE MATERIALS

(30) Priorité: 20.03.1992 FR 9203407
(43) Date de publication de la demande: 08.05.1996
(73) Titulaire: PROMETHEE, 92058 Puteaux (FR); SORETEL, F-95863 Cergy-Pontoise (FR); CONSTRUCTIONS ELECTRIQUES - CELES, F-68610 Lautenbach (FR)
(72) Inventeur: VAN DEN BROEK D'OBRENAN, Jean, F-78150 Le Chesnay (FR); MADIGOU, Nicole, F-92120 Montrouge (FR); DERIAUD, Thierry, F-68500 Guebwiller (FR)
(74) Mandataire: Phélip, Bruno
(86) Numéro de dépôt international: FR9300276
(87) Numéro de publication internationale: WO9318868

(56) Documents cités:
- EP-A- 0 265 051
- EP-A- 0 335 033
- EP-A- 0 349 405
- EP-A- 0 417 520
- EP-A- 0 437 679
- FR-A- 1 430 192
- FR-A- 2 589 228
- VGB KRAFTWERKSTECHNIK. vol. 70, no. 5, 3/4 Mai 1990, ESSEN DE pages 428-430 'VGB-KONFERENZ "R ckst nde aus der M llverbrennung"'

## Description

L'invention concerne un procédé de traitement de matériaux polluants qui sont fusibles et conducteurs de l'électricité à l'état fondu. Ce procédé est plus particulièrement destiné aux résidus issus de l'épuration des fumées d'incinération d'ordures ménagères.

Les contraintes de plus en plus sévères de protection de l'environnement conduisent à améliorer les techniques de traitement des fumées provenant de la combustion des combustibles fossiles et de l'incinération des déchets industriels, urbains ou hospitaliers.

Ainsi, les incinérateurs d'ordures ménagères sont soumis à réglementation, notamment pour la qualité des émissions dans l'atmosphère.

Les fumées brutes d' incinérateurs d' ordures ménagères présentent des teneurs élevées en poussières, métaux, acide chlorhydrique, et.... Il est donc nécessaire de prévoir des systèmes d'épuration des fumées.

Les équipements conventionnels d'épuration des fumées sont des dépoussiéreurs : notamment, des filtres à manche, dépoussiéreurs électrostatiques ou cyclones. Ces systèmes permettent d'extraire des fumées chaudes, des particules solides entraînées dans les fumées ou formées dans les fumées par condensation sur des grains de poussière de composés ou d'éléments chimiques volatils.

De plus, les nouvelles normes sur la qualité des fumées ont entraîné l'installation d'équipements permettant d'éliminer l'acide chlorhydrique des fumées et dans lesquels on fait réagir une base (généralement de la chaux), de façon à précipiter l'acide chlorhydrique sous forme de chlorure de calcium, celui-ci étant ensuite récupéré dans les poussières ou dans l'eau de lavage. Il existe actuellement différentes techniques de déchloration : par voie humide, voie semi-humide, voie sèche ou encore par condensation. Ces techniques conduisent à des résidus pulvérulents de qualités différentes. Le résidu issu de la technique par condensation est sec et contient peu de chlorure. Celui obtenu par la technique voie humide contient peu de chlorure (environ 2%) mais présente une forte humidité (jusqu'à 60 %). Dans le cas d'une épuration par voie humide, les chlorures sont en solution dans les eaux de lavage, lesquelles sont dirigées vers une rivière ou la mer, là où la réglementation l'autorise. Les résidus provenant de la voie semi-humide et de la voie sèche présentent une forte teneur en chlorure (environ 25 %) ainsi qu'un excès de réactif.

On peut enfin noter que les résidus issus des dépoussiéreurs peuvent présenter une teneur en chlorure non négligeable (environ 10 %).

De plus, tous ces résidus sont fortement chargés en métaux lourds.

L'élimination de ces résidus issus de l'épuration des fumées d'incinérateurs d'ordures ménagères (REFIOM) est maintenant réglementée, du fait de leur caractère toxique. En effet, certains éléments, notamment les métaux et les chlorures, sont susceptibles d'être lixiviés lors d'une mise en décharge et d'ainsi polluer les nappes phréatiques. On peut noter que les tests de lixiviation menés sur ces résidus montrent que les teneurs en ions chlorures, en plomb ou en cadmium dans le lixiviat sont bien supérieures aux seuils limites acceptables pour les mises en décharge de résidus urbains en France et les teneurs en ions chlorures, en plomb ou en cadmium de ces résidus dépassent même les seuils relatifs aux déchets dangereux selon les directives de la Communauté Européenne.

Il est donc fondamental de prévoir des procédés de traitement de ces résidus permettant de les rendre non lixiviables et divers procédés ont déjà été mis au point dans ce sens.

On peut ainsi citer le procédé DEGLOR développé par la société ABB qui est conçu pour le traitement de la poussière de filtre, issue des systèmes conventionnels d'épuration des fumées. Ce procédé consiste à chauffer la poussière à plus de 1 300°C dans un four de fusion électrique. A ces températures élevées, les dioxines toxiques sont détruites. De plus, ces poussières forment un laitier fluide et relâchent des vapeurs de métaux lourds. Les fumées contenant ces métaux sont aspirées et refroidies brusquement de façon à condenser des composés de métaux, les poussières récupérées en aval du refroidissement contiennent une forte proportion de ces métaux et sont alors valorisables. La poussière décontaminée est vitrifiée. Le matériau obtenu n'est pas lixiviable et peut être stocké dans des dépôts normaux ou être utilisé dans l'industrie du bâtiment ou des travaux publics.

Ce procédé présente cependant de nombreux inconvénients. Tout d'abord, il est nécessaire de prévoir un garnissage réfractaire qui est relativement cher et qui doit être remplacé périodiquement. Ce garnissage peut s'imprégner de produits toxiques et devenir lui-même polluant. De plus, les résistances du four ont une durée de vie relativement faible et un tel four ne permet pas d'obtenir des températures très élevées, celles-ci étant en général limitées à 1 800°C. enfin, des points de surchauffe apparaissent à la surface du laitier, ce qui peut entraîner des dégagements de composés chlorés et métalliques en plus grande quantité.

Le système KRUPP MAK est également destiné au traitement de poussières de filtre. Il utilise un procédé de fusion par plasma. Sous l'effet des températures élevées des arcs électriques, qui peuvent être supérieures à 2 000°C, la fusion des poussières se produit avant leur entrée dans le bain de fusion. Les substances organiques sont détruites. La plus grande partie des poussières est transformée en une coulée liquide qui, correctement refroidie, conduit à un matériau non lixiviable qui peut être recyclé dans la construction. Les composés volatiles d'acides et de métaux lourds sont transformés en gaz et sont traités en vue de la condensation et de la solidification de composés de sel et de métaux lourds. Le concentré obtenu est retraitable.

Ce procédé comporte également des inconvénients du fait de la présence d'une enceinte réfractaire et de l'usure des électrodes. De plus, ce procédé ne permet pas de bien contrôler la température du four. Des points de surchauffe apparaissent, ce qui entraîne un dégagement de composés chlorés et de métaux lourds volatils encore plus important. Enfin, ce procédé nécessite l'apport de gaz et conduit ainsi à une augmentation du volume de fumées à traiter, ce qui implique l'installation d'équipements d'épuration des fumées de forte capacité de traitement.

On peut enfin citer le procédé SOLUR qui utilise, pour assurer la vitrification, un four à électrodes immergées. Le four est mis sous pression, de sorte qu'une partie des oxydes métalliques est piégée dans le bain. Le bain est porté à une température comprise entre 1 300 et 1 400°C et la coulée du bain s'effectue par débordement. La charge obtenue est composée d'un mélange de REFIOM, de sable et de phonolite.

Ce procédé présente, comme les précédents, des inconvénients car il nécessite aussi la présence d'une enceinte réfractaire et de l'utilisation d'électrodes qui doivent être fréquemment remplacées. Ce procédé conduit également à la formation de points de surchauffe et donc à un dégagement de composés chlorés et de métaux lourds volatils encore plus important.

Tous ces procédés ont également un cout d'exploitation relativement élevé.

On connaît également des procédés de traitement qui ont été mis au point pour traiter d'autres types de produits qui sont toxiques, à des degrés divers.

Ces procédés utilisent des moyens de chauffage par induction qui génèrent la chaleur dans la masse à fondre par induction. De tels moyens de chauffage évitent la formation de points de surchauffe, lesquels conduisent à des réactions chimiques parasites libérant des composés ou des éléments chimiques polluants. Ils présentent donc des avantages par rapport aux procédés qui viennent d'être décrits.

Le brevet EP-A-0 265 051 décrit un procédé et un dispositif pour le traitement de l'amiante. Ce procédé consiste à détruire la structure fibreuse de l'amiante en faisant fondre l'amiante dans une zone chauffée par induction. Le chauffage est assuré par un four à induction constitué par un creuset de graphite destiné à recevoir l'amiante et un bobinage pour chauffer le creuset.

La transmission de chaleur vers le produit à traiter s'effectue par conductibilité thermique depuis la paroi du creuset. C'est cette seule paroi qui est le siège de courants de Foucault. La chaleur qui s'y dégage se transmet à la masse à chauffer par conduction et avec pertes.

Ainsi, le procédé et le dispositif décrits dans ce document présentent des inconvénients en termes de rendement puisqu'ils entraînent des pertes tant électriques que thermiques.

Le brevet EP-A-0 349 405 concerne un procédé et une installation de fusion par induction, d'un matériau très corrosif ou à très haut point de fusion tel que les oxydes, les verres ou certains métaux. La mise en fusion lors du démarrage est réalisée par champ micro-onde. En effet, lorsque le matériau n'est pas conducteur de l'électricité à froid il ne peut être alors le siège de courants de Foucault qui permettent son échauffement direct par induction. Par contre étant alors diélectrique, il est susceptible de s'échauffer par pertes diélectriques sous l'effet de champs électromagnétiques hyperfréquence. C'est le cas des oxydes et des verres et du laitier parfois associé aux métaux.

Le chauffage du matériau est assuré par un creuset métallique refroidi segmenté.

Ce type de creuset présente l'avantage de ne pas nécessiter l'emploi de matériau réfractaire pour protéger les parois. En effet, au contact de la paroi froide, se forme une mince couche de matériau solidifié qui protège le creuset d'une attaque chimique.

Cependant, ce creuset conduit à des rendements qui sont relativement faibles.

En effet, le creuset est constitué de secteurs en métal conducteur de l'électricité, isolés les uns des autres et il est entouré par un inducteur. L'inducteur crée un champ magnétique à haute fréquence. Chaque secteur du creuset est le siège de courants induits et se comporte comme un secondaire de transformateur en court-circuit et crée, vers l'intérieur du creuset, un champ haute fréquence. La combinaison des champs émis par les secteurs transfère par induction la chaleur au sein même de la masse à traiter. Les segments du creuset sont le siège de pertes qui sont évacuées par le fluide de refroidissement du creuset et n'apportent pratiquement pas de chaleur à la masse à traiter.

Ces pertes conduisent à des rendements qui ne sont que de l'ordre de 60 %.

Le brevet FR-2 589 228 concerne un dispositif d'élaboration en continu de matériaux obtenus à partir de substances à l'état fondu, qui utilise également un creuset froid segmenté entouré d'un solénoïde. Ce dispositif présente donc les mêmes inconvénients que celui décrit dans le document EP-A-349 405.

On peut également noter que les fours à induction comprenant un creuset froid segmenté sont d'un prix relativement élevé et présentent des risques lors de l'exploitation (court-circuit...). De plus, leur taille reste limitée à l'heure actuelle.

L'invention a donc pour objet de proposer un procédé de traitement de matières toxiques fusibles et conductrices de l'électricité à l'état fondu qui résoud les problèmes posés par les procédés et dispositifs de traitement connus en termes de coût, de rendement, de sécurité d'exploitation, tout en ne rendant pas obligatoire l'utilisation d'une enceinte réfractaire et en assurant un contrôle précis de la température du bain de fusion pour minimiser les dégagements de chlore et de métaux lourds volatils.

L'invention concerne donc un procédé de traitement de matériaux polluants, fusibles et conducteurs électriques à l'état fondu, consistant à :
- introduire lesdits matériaux dans un four à induction comprenant un circuit inducteur et un creuset,
- chauffer directement par induction lesdits matériaux dans ledit creuset, pour assurer leur fusion, l'induction étant créée par le circuit inducteur, relié galvaniquement à une source de puissance, le creuset n'étant le siège d'aucun courant induit,
- évacuer les produits fondus dudit four, lesdits produits étant recueillis, après refroidissement, sous une forme non lixiviable.
De préférence, l'introduction desdits matériaux et l'évacuation des produits fondus s'effectuent de façon continue.

De préférence, le procédé consiste à introduire des additifs jouant le rôle de fondants, lorsque les matériaux ne sont pas ou insuffisamment auto-fondants, notamment lorsqu'ils comportent une forte proportion de chlore, pour assurer et/ou améliorer la fusion homogène des déchets, permettant ainsi la formation d'un produit final homogène non lixiviable.

Le procédé de l'invention se caractérise également par la formation, en surface du bain, d'une croûte froide permettant de piéger, au moins en partie, les éléments volatils et notamment les métaux.

Dans un mode particulier de mise en oeuvre du procédé, on fait fonctionner le four sous atmosphère contrôlée, de façon à réduire les fuites gazeuses dangereuses ou encore à bien contrôler les réactions chimiques éventuelles à l'intérieur du four.

De façon préférée, le procédé consiste également à traiter les fumées issues du four.

Dans une première forme de mise en oeuvre, le traitement des fumées consiste tout d'abord à éliminer les gaz inflammables formés dans le four puis à récupérer les composés métalliques présents dans les fumées émises par le four.

Dans une deuxième variante, on évite la formation d'oxydes métalliques lors de la fusion et on récupère directement les métaux correspondants.

De préférence, lorsque le procédé a conduit à la formation d'acides, on lave les gaz pour les dissoudre et les récupérer sous forme de sels.

Dans un mode particulier de mise en oeuvre du procédé, on peut également prévoir, dans une étape finale, d'épurer les gaz émis.

Dans une deuxième forme de mise en oeuvre, le traitement des fumées consiste à refroidir les gaz et à récupérer les poussières et les composés condensables puis à diriger les fumées vers un système d'épuration des fumées existant.

Si le procédé est utilisé pour des déchets, ce type de traitement est effectué de manière avantageuse lorsque le procédé est mis en oeuvre sur le même site que l'usine d'incinération.

Le procédé selon l'invention peut être mis en oeuvre avec un dispositif de traitement de matériaux polluants, fusibles et conducteurs à l'état fondu comprenant :
- des moyens d'alimentation en matériaux et éventuellement en additifs,
- un four à induction comprenant un creuset et un circuit inducteur relié galvaniquement à une source de puissance, ledit four chauffant directement par induction lesdits matériaux pour assurer leur fusion et le creuset n'étant le siège d'aucun courant induit,
- des moyens d'évacuation des produits fondus, lesquels sont recueillis, après refroidissement, sous une forme non lixiviable,
- une installation pour le traitement des fumées émises par le four.

De préférence, le four à induction est caractérisé par la formation et le maintien, au moins partiel, d'une pellicule solidifiée autour des produits en fusion refroidis sur leur contour extérieur.

Dans une première forme de réalisation, le four comprend une spire métallique et conductrice de l'électricité qui est raccordée à un générateur de courant moyenne fréquence et éventuellement à des moyens de compensation d'énergie réactive, ainsi qu'un fond, la spire et le fond étant refroidis par un système approprié.

Dans une variante, une paroi en matériau réfractaire et non conducteur de l'électricité à l'état solide est placée sur la paroi interne de la spire.

Dans une deuxième forme de réalisation, le four comprend un creuset en un matériau réfractaire et non conducteur de l'électricité à l'état solide et des moyens inducteurs disposés autour dudit creuset.

De façon à pouvoir faire fonctionner le four sous atmosphère contrôlée, le four comporte un couvercle, des conduits étant alors prévus pour respectivement l'introduction des déchets, l'évacuation des gaz émis lors de la fusion des déchets et l'injection de gaz destinés au contrôle de l'atmosphère interne.

De préférence, le four comporte un système d'évacuation des matières en fusion.

Dans une première variante, le four comporte un bec de coulée situé au-dessous du niveau du bain, l'évacuation s'effectuant de façon continue.

Dans une deuxième variante, le four comporte un bec de coulée situé au-dessus du niveau du bain, et peut être basculé, l'évacuation s'effectuant par débordement par la partie haute du four.

Dans un troisième variante, le four comporte, dans sa partie basse, un canal de coulée.

Dans une première forme de réalisation, l'installation de traitement des fumées comprend une chambre de post-combustion qui est reliée au four par le conduit d'évacuation des gaz.

De préférence, un dépoussiéreur, tel qu'un cyclone, est prévu en sortie de la chambre de post-combustion.

De façon préférée, cette installation comprend, lorsque la formation d'oxydes métalliques est évitée lors de la fusion, des systèmes permettant de récupérer directement les métaux contenus dans les fumées, ces dispositifs étant placés en sortie du four ou en sortie de la chambre de post-combustion.

On prévoit, de façon avantageuse, en sortie du cyclone ou du dispositif de récupération des métaux, un laveur de gaz, lorsqu'une composante chlorée est présente dans les gaz à traiter.

De préférence, l'installation comprend de plus un autre dépoussiéreur, tel qu'un cyclone, auquel est relié une cheminée par laquelle s'échappent les gaz émis par le dispositif.

Dans une deuxième forme de réalisation, cette installation comprend un cyclone humide, les fumées s'échappant dudit cyclone étant dirigées vers le système d'épuration des fumées existant dans l'usine d'incinération.

L'invention sera mieux comprise et d'autres buts, avantages et caractéristiques de celle-ci apparaîtront plus clairement à la description qui suit des modes non limitatifs de réalisation, description qui est faite au regard des dessins annexés, sur lesquels :
- la figure 1 représente un premier four à induction électromagnétique convenant pour la mise en oeuvre du procédé selon l'invention,
- la figure 2 représente un deuxième four à induction convenant pour la mise en oeuvre du procédé selon l'invention,
- la figure 3 représente une première variante de réalisation des moyens d'évacuation des produits fondus,
- la figure 4 présente une deuxième variante de réalisation des moyens d'évacuation des produits fondus,
- la figure 5 représente une troisième variante de réalisation des moyens d'évacuation des produits fondus,
- la figure 6 illustre un dispositif complet de traitement de déchets pour la mise en oeuvre du procédé selon l'invention, et
- la figure 7 illustre un dispositif de traitement pour la mise en oeuvre du procédé selon l'invention utilisant les équipements classiques d'épuration des fumées d'une usine d'incinération.

Les éléments communs aux différentes figures seront désignés par les mêmes références.

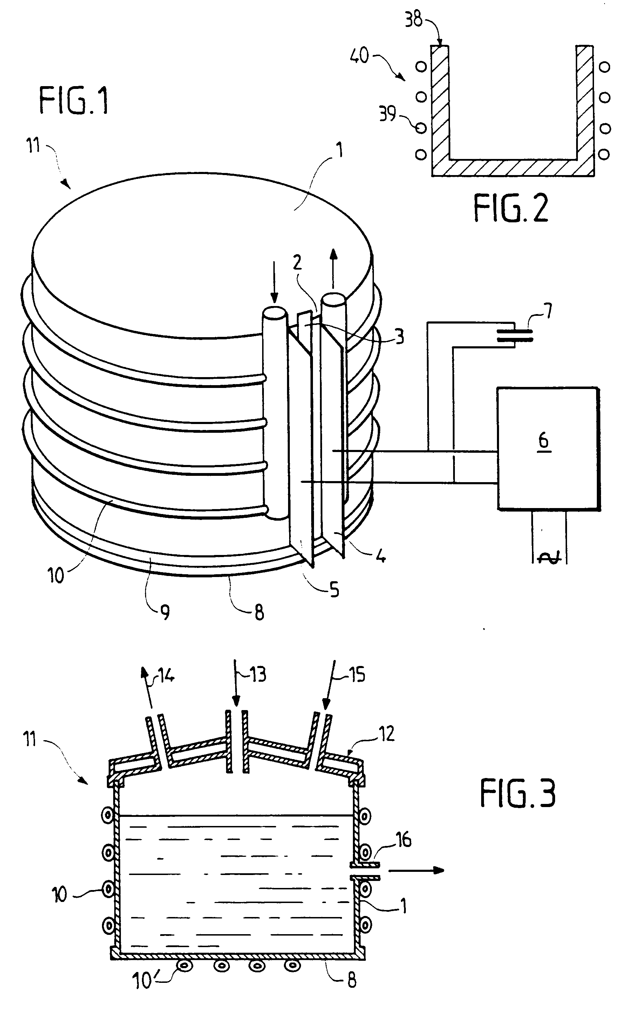

Le four illustré à la figure 1 est de type "autocreuset inductif à spire directe" et peut être utilisé dans le procédé selon l'invention. Des fours de ce type ont déjà été décrits dans l'état de la technique et on peut en particulier citer le brevet français n°1.430.192 qui est introduit ici à titre de référence.

Ce four 11 comprend une spire (cylindre) 1 constituée par une feuille de métal bon conducteur de l'électricité et de la chaleur, par exemple du cuivre. Ce cylindre comporte une discontinuité 2, par exemple une fente étroite entre deux génératrices. Cette discontinuité est essentiellement électrique, c'est-à-dire que le vide entre les deux génératrices est bouché par un corps parallélépipédique 3, isolant électrique qui peut être parcouru par un canal, ce dernier assurant le refroidissement du corps 3, par circulation d'un liquide de refroidissement. Ce corps 3 permet de constituer avec le cylindre métallique une paroi interne continue.

A chaque bord de la fente 2 du cylindre métallique 1 est fixée une plaque 4, 5, conductrice de l'électricité. L'ensemble obtenu constitue une spire de métal capable d'être traversée par des courants électriques. Les deux plaques conductrices 4 et 5 sont reliées à une source de puissance (générateur de courant moyenne fréquence) 6 et éventuellement à des moyens destinés à compenser l'énergie réactive consommée dans le procédé qui sera décrit, tel que le condensateur 7.

La partie inférieure de cet ensemble cylindrique repose sur un fond 8 qui est constitué par une plaque circulaire en métal ou en produit réfractaire. Un anneau 9, en matériau isolant de l'électricité si le fond 8 est métallique, assure l'étanchéité entre la paroi cylindrique 1 et le fond 8. Cet anneau peut être parcouru par un canal qui en assure le refroidissement par circulation d'un liquide.

L'ensemble formé par la spire 1 et le fond 8 est parcouru par un serpentin 10, 10', plaqué sur la face extérieure de la paroi du cylindre 1 et du fond 8. Un liquide de refroidissement, par exemple de l'eau à faible teneur en matière minérale, parcourt le serpentin en débit continu. Le sens d'écoulement du liquide dans le serpentin est représenté par les flèches F1 et F2.

Le fonctionnement du four est le suivant. On dépose à l'intérieur du volume constitué par la spire 1 et le fond 8, des matériaux, tels que des déchets qui se présentent notamment sous la forme de poudre ou de granules. A la température considérée, ces matériaux présentent une résistivité plus ou moins importante.

La spire 1, raccordée au générateur 6, est le siège d'ampères alternatifs qui créent à l'intérieur du volume cylindrique un champ magnétique alternatif moyenne fréquence qui induit des courants de Foucault dans la matière. En choisissant de manière appropriée la fréquence et dans la mesure où les moyens de compensation d'énergie réactive contribuent efficacement à la production d'énergie réactive, une partie importante de l'énergie transférée par le générateur 6 est dissipée par les courants de Foucault dans la matière dont l'enthalpie s'élève.

Ce four permet donc de fondre les déchets qui y sont introduits. En effet, ceux-ci contiennent de oxydes, notamment SiO₂, Al₂O₃ et CaO, qui ont la propriété de fondre progressivement en passant par l'état pâteux et de passer par l'état de surfusion lors de leur refroidissement ou de rester dans cet état. Ils ont en outre la propriété d'être conducteurs de l'électricité à l'état pâteux ou liquide, par exemple à partir de 1 100°C, alors qu'ils sont isolants à l'état froid.

Lorsque le four est en opération et que les matières qu'il contient sont à l'état liquide ou semi-liquide, dans sa partie centrale, il se forme, du fait du refroidissement des parois, une pellicule de protection de matière vitrifiée qui assure un isolement électrique de la paroi par rapport au produit en fusion et une bonne étanchéité aux fuites.

C'est cette pellicule de protection qui sert de creuset et il n'est donc pas nécessaire de prévoir une enceinte réfractaire. Ceci permet d'éliminer les inconvénients liés à l'utilisation d'une enceinte réfractaire et qui ont été précédemment mis en évidence. On peut noter qu'une fusion partielle de la pellicule de protection dans le bain de fusion ne compromet pas le fonctionnement du four puisqu'elle est de même nature que le bain.

On peut également noter que le chauffage par induction électromagnétique évite l'utilisation de corps chauffants, dont l'usure conduirait à les remplacer.

De plus, le chauffage par induction électromagnétique ne fait pas intervenir l'utilisation de gaz, les fumées sont donc uniquement constituées des vapeurs émises et représentent un faible volume, ce qui évite l'installation d'équipements de taille importante pour le traitement des fumées, et permet éventuellement d'envoyer ces fumées dans le circuit de fumées de l'incinérateur sans que cela entraîne de modifications.

On peut également noter que le chauffage par induction électromagnétique présente l'avantage de s'effectuer avec une bonne homogénéité de température car l'énergie de chauffe naît au sein même de la matière placée dans le four et s'accompagne d'un brassage spontané. Ceci permet d'éviter la formation de points de surchauffe, lesquels occasionnent des réactions chimiques parasites libérant des composés ou éléments chimiques polluants, notamment des composés chlorés et des métaux lourds volatils. Ce four permet donc de pallier les inconvénients mis en évidence dans les procédés connus qui conduisent à la formation de points de surchauffe.

Le four à induction utilisé présente d'autres avantages par rapport aux autres types de fours à induction qui ont pu être utilisés dans des procédés de traitement connus.

Tout d'abord, le four génère la chaleur directement dans les matériaux à chauffer. Ainsi, la paroi du four n'est pas le siège de courants de Foucault qui entraîneraient des pertes. Aucune perte n'est entraînée par une transmission de chaleur depuis le creuset jusqu'aux matériaux.

De plus, la spire 1 qui constitue le circuit inducteur du four à induction, est reliée galvaniquement à la source de puissance, ce qui n'est pas le cas des creusets froids segmentés. Ceci entraîne un rendement bien supérieur à celui obtenu pour les creusets froids segmentés, puisqu'il est de l'ordre de 85 %.

On peut noter que la source de puissance peut comporter, de manière classique, un système d'adaptation d'impédance ou un système d'isolement galvanique. Dans la présente demande, on considère que ces systèmes font partie intégrante de la source de la puissance dont ils n'affectent pas le rendement de façon sensible.

Ainsi, même dans le cas ou la source de puissance comporte de tels systèmes, on considère ici que la liaison entre la source de puissance et le circuit inducteur du four est galvanique et dépourvue de pertes.

Il peut être intéressant de prévoir une paroi en matériau réfractaire sur la paroi interne du cylindre. Ceci permet notamment de diminuer les pertes. Cette paroi en matériau réfractaire n'a pas à être remplacée fréquemment car elle est protégée par la pellicule de matière solide qui se forme lorsque le four est en opération. Le matériau choisi est non conducteur de l'électricité à l'état fondu. Il n'est le siège d'aucun courant de Foucault et donc d'aucune perte.

Le four illustré à la figure 2 est du type "auto-creuset" et peut également être utilisé dans le procédé selon l'invention. Ce four 40 comprend un creuset 38 en un matériau réfractaire et non conducteur de l'électricité à l'état solide, tel que la silice ou l'alumine, ainsi qu'un solénoïde 39 entourant le creuset et pourvu de moyens de refroidissement appropriés. Le matériau réfractaire est choisi en fonction des matériaux à traiter.

Le creuset 38 n'est donc le siège d'aucune perte et, l'induction est générée directement dans la masse à fondre par le solénoïde 39. De plus, ce dernier qui constitue le circuit inducteur est relié galvaniquement à une source de puissance, non représentée sur la figure 2.

Les remarques formulées dans le cas du four de la figure 1 s'appliquent également au four qui vient d'être décrit. Ainsi, même si la source de puissance comporte des systèmes classiques d'adaptation d'impédance ou d'isolement galvanique, on considère que la liaison entre le circuit inducteur et la source de puissance est une liaison galvanique.

On peut noter que si les matériaux à traiter ne sont pas ou mal autofondants, c'est-à-dire, que portés à des températures élevées, ils ne se liquéfient pas ou difficilement, on ajoute alors des additifs. Ceux-ci sont communément appelés des fondants et permettent d'assurer une meilleure fusion ou encore la vitrification totale, permettant ainsi la formation d'un produit final homogène, non lixiviable.

Ces additifs peuvent être par exemple : des débris de verre provenant de la collecte du verre usé, du sable, le borax, le carbonate de sodium, le carbonate de potassium ou encore la phonolite.

Lorsque les déchets présentent une grande proportion de chlorures, il peut se former deux phases, une première phase composée principalement d'oxydes minéraux et une deuxième phase composée principalement de sels, qui est de densité inférieure à celle de la première.

Dans certains cas, il sera intéressant de faire fonctionner le four sous une atmosphère contrôlée, notamment pour réduire des fuites gazeuses dangereuses ou pour contrôler les réactions chimiques éventuelles à l'intérieur du four.

Il sera alors nécessaire de prévoir un couvercle pour clore l'espace interne du four. Un tel couvercle n'est pas représenté aux figures 1 et 2, mais il apparaît aux figures 3, 4 et 5, sous la référence 12. Les figures 3 à 7 comportent un four tel qu'illustré à la figure 1. On peut également prévoir un four conforme à la figure 2.

On prévoit, à travers ce couvercle 12, au moins un conduit 13 pour l'introduction des déchets et éventuellement des additifs, au moins un conduit 14 pour les gaz émis lors de la fusion des déchets et au moins un conduit 15 pour injecter des gaz destinés au contrôle de l'atmosphère interne. Ce couvercle est de préférence protégé par une paroi interne convenablement agencée contre les effets du rayonnement thermique, l'action chimique des gaz et la projection de matières en fusion. Ce couvercle ne doit pas court-circuiter électriquement la spire 1 du four 11.

On comprend qu'il est intéressant d'utiliser ce four de façon quasi-continue de façon à ne pas arrêter fréquemment le processus de fusion. On assure alors l'évacuation des produits fondus, en conservant un volume suffisant de matières en fusion pour éviter le désamorçage du processus de fusion.

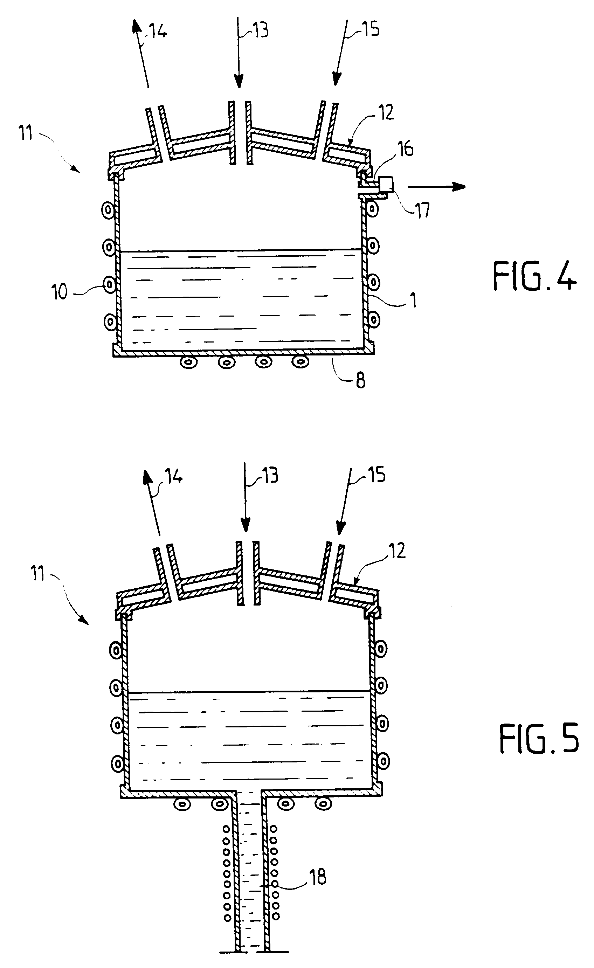

Les figures 3 à 5 illustrent différents systèmes d'évacuation des matières en fusion. En référence à la figure 3, on prévoit dans la paroi cylindrique 1 du four un bec de coulée 16 situé sous le niveau du bain, ce qui permet l'évacuation des produits, tout en empêchant la vidange du four, de façon à éviter le désamorçage du processus de fusion. L'évacuation s'effectue de façon continue par débordement. En référence à la figure 4, le bec de coulée 16 est situé au-dessus du niveau du bain et il est fermé par un bouchon amovible 17. Pour extraire la matière en fusion, on bascule le four de façon à mettre le bec de coulée ouvert au niveau du bain, tout en empêchant la vidange complète du four, de façon à éviter le désamorçage du processus de fusion. L'évacuation peut s'effectuer périodiquement ou, de préférence, de façon continue, une coulée continue étant évacuée du four par débordement, par le haut du four. La figure 5 illustre une autre forme de réalisation des moyens d'évacuation. Ceux-ci consistent en un canal de coulée 18 par lequel les produits en fusion s'écoulent de façon continue.

Dans le cas des déchets à forte proportion en chlorures pour lesquels il se forme deux phases, il convient de prévoir des moyens d'évacuation appropriés pour évacuer la première phase, composée principalement d'oxydes minéraux, indépendamment de la deuxième phase, composée principalement de sels.

Les matières en fusion extraites du four se refroidissent et se solidifient. Dans la forme de réalisation décrite à la figure 5, cette solidification s'effectue en continu dans le canal de coulée. Si les matières en fusion ne sont pas refroidies de façon brutale, elles se fractionnent spontanément et forment des graviers. Dans le cas où le refroidissement est brutal, elles éclatent en petits fragments et forment des sables.

On peut noter que le système de refroidissement des parois du four par un serpentin qui a été décrit en référence à la figure 1, sert à refroidir la paroi cylindrique 1 et le fond 8, mais peut également être utilisé pour refroidir le couvercle 12 et éventuellement le canal de coulée 18. Ce système de refroidissement est raccordé à un système d'échange thermique avec une source froide et à un équipement de traitement assurant le maintien de ses caractéristiques électriques.

On peut noter que les sas et vannes d'isolation qui sont éventuellement nécessaires au fonctionnement du four ne sont pas illustrés par les figures.

De façon connue, le démarrage du processus de fusion dans le four peut être effectué en introduisant provisoirement un corps conducteur de l'électricité à froid avec les déchets à fondre. Ce corps doit être électriquement et chimiquement compatible avec l'installation et les matières pour lesquelles il est conçu. On peut par exemple citer le zirconium ou le graphite.

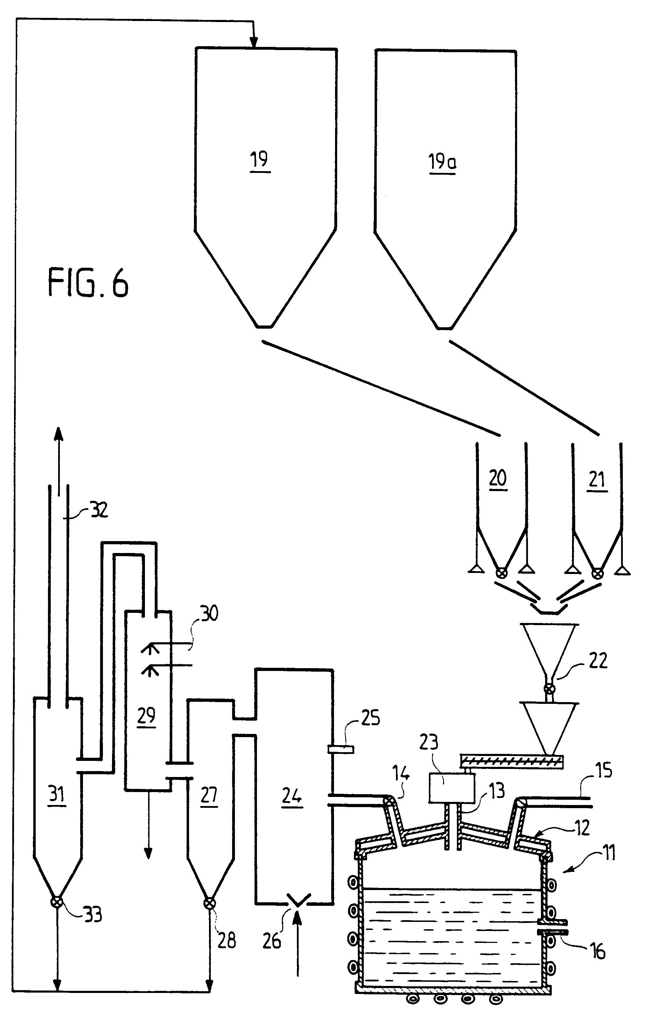

On se réfère maintenant à la figure 6 qui représente un dispositif complet de traitement de déchets selon le procédé de l'invention. On notera que le four 11 qui est représenté à la figure 6 correspond à la variante de réalisation de la figure 3, c'est-à-dire celle dans laquelle l'extraction des matières fondues s'effectue par débordement. On comprend aisément que les fours illustrés aux figures 4 et 5, c'est-à-dire ceux où l'extraction des matières fondues s'effectue soit par basculement du four, soit par coulée continue, peuvent être substitués au four illustré à la figure 6.

L'élément central de ce dispositif est le four qui a été décrit précédemment au regard des figures 1, et 3 à 5 et dont la description ne sera pas reprise en détail.

Le dispositif de traitement comporte tout d'abord des trémies de stockage. Deux trémies sont représentées sur la figure 6, elles portent les références 19 et 19a. L'une d'elle renferme les déchets qui se présentent notamment sous forme de poudre ou de granules tandis que l'autre contient les additifs dont le rôle a précédemment été expliqué. Les matières contenues dans ces deux trémies 19 et 19a sont conduites dans deux trémies peseuses 20 et 21, l'une étant destinée aux déchets et l'autre aux additifs. Le contenu de ces deux trémies 20 et 21 est déversé dans un système 22 de double-trémie avec vanne pneumatique ou sas alvéolaire. Ce système permet d'assurer l'introduction des matières dans le four, sans fuite de gaz, malgré une éventuelle différence de pression entre l'amont et l'aval de ce système 22. Les matières issues du système 22 sont apportées à des moyens 23 d'introduction des matières solides dans le four. Ces matières pénètrent dans le four par le conduit 13.

Comme expliqué précédemment, après démarrage du processus de fusion, les matières introduites dans le four sont liquéfiées et sont extraites de façon continue, par débordement, la matière en fusion s'écoulant alors par le bec de coulée 16 situé sous le niveau du bain de produits en fusion.

Par le conduit 15, des gaz peuvent être injectés pour contrôler l'atmosphère interne du four.

Les gaz émis lors de la fusion des déchets s'évacuent par l'intermédiaire du conduit 14.

Ils sont tout d'abord conduits dans une chambre de post-combustion 24 dans laquelle sont brûlés les gaz inflammables qui sont formés dans le four lorsque les déchets comportent des matières organiques, ce qui est pratiquement toujours le cas.

La référence 25 concerne un brûleur à gaz qui permet d'assurer la combustion de ces gaz. On peut également prévoir un système 26 permettant d'apporter de l'air dans la chambre de post-combustion 24.

On prévoit, à la suite de la chambre de post-combustion 24, un dépoussiéreur tel qu'un cyclone 27 qui assure la décantation des poussières émises par le four. Ces poussières sont en général des oxydes métalliques ou des poussières de métal non oxydées. Ces poussières sont polluantes et sont récupérées à la base 28 du cyclone. Elles peuvent être ultérieurement retraitées en vue d'une valorisation. Elles peuvent également être recyclées dans le dispositif en étant introduites dans la trémie 19. On peut également prévoir un précipitateur électrostatique pour augmenter l'efficacité du cyclone, un tel précipitateur n'est pas illustré sur la figure 5.

En sortie du cyclone 27, on prévoit un laveur de gaz 29. Ce dispositif est nécessaire s'il reste une composante chlorée dans les gaz à traiter. Ce laveur de gaz permet d'abaisser la température des fumées et de dissoudre les acides formés dans les étapes de fusion et de post-combustion. Ces acides, par exemple HCl ou H₂SO₄, peuvent être ensuite neutralisés dans la solution aqueuse par des agents chimiques appropriés puis récupérés sous forme de sels. La référence 30 désigne les moyens apportant la solution aqueuse.

A la suite du laveur de gaz 29, on peut éventuellement prévoir un autre dépoussiéreur, tel un cyclone 31. Le cyclone permet d'épurer encore les gaz émis par le système, qui s'échappent par la cheminée 32. Les poussières sont récupérées à la base 33 du cyclone 31. Elles peuvent être ultérieurement retraitées en vue d'une valorisation ou encore recyclées dans le dispositif par introduction dans la trémie 19. Ce cyclone 31 n'est pas systématiquement présent dans le dispositif de traitement utilisé selon l'invention.

On peut également envisager d'utiliser des dispositifs basés sur un procédé d'adsorption sur du charbon actif ou sur du coke de lignite. Ces dispositifs procèdent, soit en injectant l'adsorbant dans les fumées, soit en faisant passer les fumées dans des filtres constitués de couches d'adsorbants.

Des dispositifs différents du cyclone 27 peuvent être envisagés pour récupérer les métaux présents dans les fumées émises par le four. Ces dispositifs peuvent être utilisés à la place du cyclone 27 ou en complément de celui-ci. Pour cela, on évite précédemment la formation d'oxydes métalliques, par un choix judicieux de la composition de l'atmosphère du four et de la stoechiométrie de la post-combustion. Les métaux qui s'évaporent dans le four restent alors à l'état non-combiné et peuvent se condenser à l'état "métal".

On connaît ainsi des dispositifs qui comprennent une roue qui barbote dans un bain de plomb et qui crée un rideau de plomb liquide. Des gaz contenant du zinc passent à travers le rideau de plomb et le zinc se dissout dans le plomb. Ces dispositifs seront placés en sortie du four ou encore en sortie de la chambre de post-combustion. La séparation des métaux dissous dans le métal de base se fera ensuite, par distillation fractionnée.

On connaît également des dispositifs dans lesquels les gaz sont mis en présence de poussières métalliques dans une zone maintenue à moins de 250°C par un échangeur de chaleur. Ces poussières métalliques approximativement de même composition mais froides, servent de germes de condensation. Les poussières sont ensuite séparées dans un cyclone. Après refroidissement, une partie des poussières récupérées dans le cyclone est réinjectée dans la zone de coalescence pour entretenir le phénomène de condensation.

Dans le cas où le dispositif de traitement des résidus se trouve sur le même site que l'usine d'incinération des ordures, il peut être intéressant d'utiliser les systèmes d'épuration des fumées existant dans l'usine.

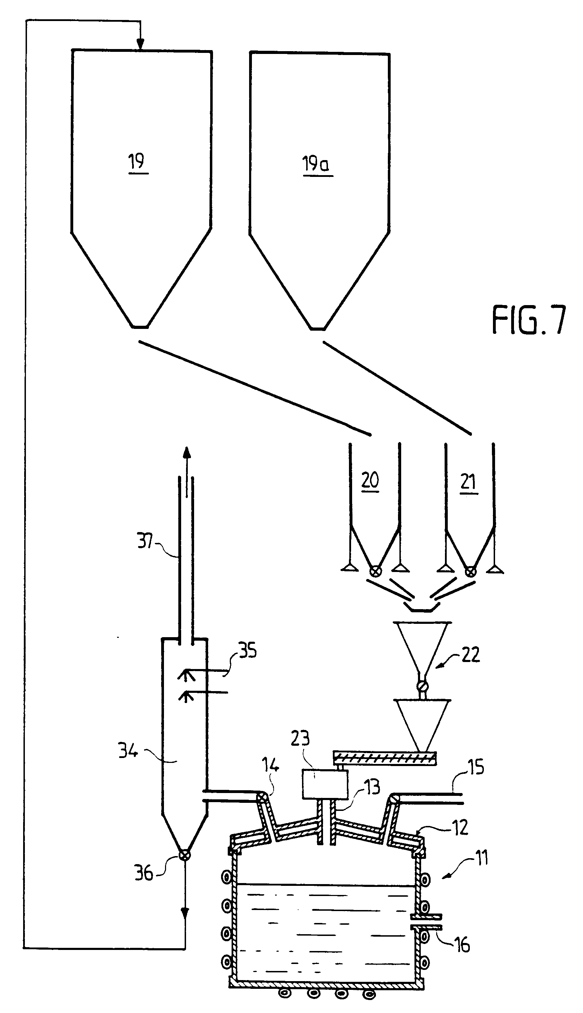

En référence à la figure 7, un autre dispositif utilisable selon l'invention comporte les mêmes systèmes de stockage et d'introduction dans le four ainsi que le même four que ceux illustrés à la figure 6 et ceux-ci ne sont pas décrits de nouveau en détail.

Par contre, l'installation pour le traitement des fumées est complètement modifiée. Elle comprend essentiellement un cyclone humide 34, les moyens apportant l'eau de refroidissement au cyclone étant référencés 35. Ce système est encore appelé laveur venturi. On récupère les poussières à la base 36 du cyclone 34. Elles peuvent être ultérieurement retraitées en vue d'une valorisation des métaux ou encore recyclées dans le dispositif par introduction dans la trémie 19.

Les fumées s'échappent par l'intermédiaire du conduit d'évacuation 37 et sont dirigées vers les systèmes d'épuration des fumées existant dans l'usine d'incinération.

Dans la mesure où le chauffage par induction électromagnétique ne nécessite pas l'utilisation de gaz additionnels, les fumées sont constituées uniquement par les vapeurs émises. Elles représentent un faible volume et il est donc possible de les transmettre vers les systèmes d'épuration des fumées déjà existant sans qu'il soit nécessaire d'apporter des modifications à ces derniers.

On peut également noter que lorsque le four est en opération et que les matériaux qu'il contient sont à l'état liquide ou semi-liquide, il se forme, en surface du bain, une croûte froide qui permet de piéger au moins en partie les éléments volatils, notamment les métaux. Ce phénomène permet également de limiter la taille des équipements à prévoir pour le traitement des fumées émises par le four.

Ainsi, dans le cas du dispositif complet de traitement des déchets décrit à la figure 6, le faible volume des fumées ne nécessite pas de prévoir des installations de taille importante pour le traitement des fumées.

Les signes de référence insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

## Revendications

1. Procédé de traitement de matériaux polluants qui sont fusibles et conducteurs électriques à l'état fondu, consistant à :
- introduire lesdits matériaux dans un four à induction (11, 40) comprenant un circuit inducteur (1, 39) et un creuset (1,8 ; 38),
- chauffer directement par induction lesdits matériaux dans ledit creuset pour assurer leur fusion, l'induction étant créée par le circuit inducteur (1, 39), relié galvaniquement à une source de puissance (6), le creuset (1,8 ; 38) n'étant le siège d'aucun courant induit,
- évacuer les produits fondus dudit four, lesdits produits étant recueillis, après refroidissement, sous une forme non lixiviable.

2. Procédé selon la revendication 1, caractérisé en ce que l'introduction desdits matériaux et l'évacuation des produits fondus s'effectuent de façon continue.

3. Procédé selon l'une des revendications 1 ou 2, caractérisé en ce qu'il consiste à ajouter des additifs permettant d'assurer et/ou d'améliorer la fusion homogène des matériaux permettant ainsi la formation d'un produit final homogène non lixiviable.

4. Procédé selon l'une des revendications 1 à 3 caractérisé par la formation, en surface du bain, d'une croûte froide permettant de piéger, au moins en partie, les éléments volatils et notamment les métaux.

5. Procédé selon l'une des revendications 1 à 4, caractérisé en ce que l'on fait fonctionner le four sous atmosphère contrôlée.

6. Procédé selon l'une des revendications 1 à 5, caractérisé en qu'on traite les fumées émises par le four.

7. Procédé selon la revendication 6, caractérisé en ce que le traitement consiste tout d'abord à éliminer les gaz inflammables formés dans le four puis à récupérer les composés métalliques présents dans les fumées émises par le four.

8. Procédé selon la revendication 7, caractérisé en ce qu'on évite la formation d'oxydes métalliques lors de la fusion et en ce qu'on récupère directement les métaux correspondants.

9. Procédé selon l'une des revendications 6 à 8, caractérisé en ce que, lorsqu'il a conduit à la formation d'acide, on lave les gaz pour les dissoudre et les récupérer sous forme de sels.

10. Procédé selon l'une des revendications 6 à 9, caractérisé en ce que, dans une étape finale, on épure les gaz avant leur émission dans l'atmosphère.

11. Procédé selon la revendication 6, caractérisé en que le traitement consiste à refroidir les gaz et à récupérer les poussières et les composés condensables puis à diriger les fumées vers un système d'épuration existant.

## Claims

1. Process for treating pollutant materials which are fusible and conductors of electricity in the melted state, consisting in :
- introducing the said materials into an induction furnace (11,40) comprising an inductor circuit (1,39) and a crucible (1,8;38),
- directly heating the said materials by induction in said crucible to ensure their melting, the induction being created by the inductor circuit (1,39) which is galvanically connected to a power source (6), the crucible (1,8;38) being the seat of no eddy current,
- removing the melted products from the said furnace, the said products being gathered, after cooling, in non-leachable form.

2. The process of claim 1 wherein the introduction of the said materials and the removal of the melted products is performed in continuous fashion.

3. The process of claim 1 or 2 wherein it consists in adding additives to ensure and/or improve the homogeneous melting of the materials, thus allowing the formation of a final, homogeneous, non leachable product.

4. The process of any one of claims 1 to 3 wherein a solid crust is formed on the surface of the bath which makes it possible to trap at least a part of the volatile elements, particularly the metals.

5. The process of any one of claims 1 to 4 wherein the furnace is operated under a controlled atmosphere.

6. The process of any one of claims 1 to 5 wherein fumes released by the furnace are treated.

7. The process of claim 6 wherein the treatment further consists in eliminating the inflammable gases formed in the furnace and then recovering the metal compounds present in the fumes released by the furnace.

8. The process of claim 7 wherein the formation of metal oxides is avoided during melting and the corresponding metals are directly recovered.

9. The process of any one of claim 6 to 8 wherein if it results in the formation of acids, the gases are scrubbed to dissolve the acids and recover the acids in the form of salts.

10. The process of any one of claims 6 to 9 wherein, in a final stage, the gases are scrubbed before being released into the atmosphere.

11. The process of claim 6 wherein the treatment consists in cooling the gases and recovering dust and condensable particles and then in sending the fumes to an existing purification system.

## Patentansprüche

1. Verfahren zur Behandlung von umweltbelastenden Materialien, die schmelzbar und im geschmolzenen Zustand elektrisch leitend sind, bestehend in:
- der Einführung dieser Materialien in einen Induktionsofen (11,40), der einen Induktionskreis (1, 39) und eine Schmelzrinne (1, 8; 38) umfaßt,
- der direkten Erhitzung dieser Materialien durch Induktion in dieser Schmelzrinne, um deren Schmelzung zu gewährleisten, wobei die Induktion durch den Induktionskreis (1, 39) erzeugt wird, der galvanisch an eine Leistungsquelle (6) angeschlossen ist, wobei die Schmelzrinne (1, 8; 38) der Sitz von keinerlei induziertem Strom ist,
- der Entfernung der Schmelzprodukte aus diesem Ofen, wobei diese Produkte nach der Abkühlung in nicht auslaugbarer Form gesammelt werden.

2. Verfahren nach Anspruch 1, dadurch gekennzeichnet, daß die Einführung dieser Materialien und die Entfernung der Schmelzprodukte auf kontinuierliche Weise erfolgen.

3. Verfahren nach einem der Ansprüche 1 oder 2, dadurch gekennzeichnet, daß es darin bestellt, Zusatzstoffe hinzuzufügen, die es ermöglichen, die homogene Schmelzung der Materialien zu gewährleisten und/oder zu verbessern, wodurch die Bildung eines homogenen, nicht auslaugbaren Endproduktes ermöglicht wird.

4. Verfahren nach einem der Ansprüche 1 bis 3, gekennzeichnet durch die Bildung einer kalten Haut auf der Badoberfläche, die es ermöglicht, zumindest zum Teil die flüchtigen Elemente und insbesondere die Metalle einzufangen.

5. Verfahren nach einem der Ansprüche 1 bis 4, dadurch gekennzeichnet, daß der Ofen unter kontrollierter Atmosphäre betrieben wird.

6. Verfahren nach einem der Ansprüche 1 bis 5, dadurch gekennzeichnet, daß die von dem Ofen abgegebenen Rauchgase behandelt werden.

7. Verfahren nach Anspruch 6, dadurch gekennzeichnet, daß die Behandlung darin besteht, zuerst die in dem Ofen gebildeten, entzündlichen Gase zu beseitigen, sodann die metallischen Verbindungen, die in den vom Ofen abgegebenen Rauchgasen vorhanden sind, wiederzugewinnen.

8. Verfahren nach Anspruch 7, dadurch gekennzeichnet, daß die Bildung von Metalloxyden während der Schmelzung vermieden wird und daß die entsprechenden Metalle direkt gewonnen werden.

9. Verfahren nach einem der Ansprüche 6 bis 8, dadurch gekennzeichnet, daß, wenn es zur Säurebildung geführt hat, die Gase gewaschen werden, um sie aufzulösen und in Form von Salzen wiederzugewinnen.

10. Verfahren nach einem der Ansprüche 6 bis 9, dadurch gekennzeichnet, daß in einer Endphase die Gase gereinigt werden, bevor sie an die Atmosphäre abgegeben werden.

11. Verfahren nach Anspruch 6, dadurch gekennzeichnet, daß die Behandlung darin bestellt, die Gase abzukühlen und die Staubteilchen und kondensierbaren Verbindungen wiederzugewinnen und sodann die Rauchgase in ein bestehendes Reinigungssystem zu leiten.
